# EUROPEAN PATENT APPLICATION

(11) **EP 4 618 193 A1**
(43) Date of publication of application: **17.09.2025**
(21) Application number: 23888869.7
(22) Date of filing: 10.08.2023
(51) Int. Cl.: H01M 4/58, H01M 10/0525, H01M 4/136, H01M 4/36, H01M 4/02

(54) **LITHIUM SECONDARY BATTERY COMPRISING AMORPHOUS CATHODE ACTIVE MATERIAL**

(30) Priority: 09.11.2022 KR 20220148364; 03.05.2023 KR 20230057404
(71) Applicant: Seoul National University R&DB Foundation, Seoul 08826 (KR)
(72) Inventor: KANG, Ki Suk, Seoul 08826 (KR); HEO, Jae Hoon, Seoul 08826 (KR)
(74) Representative: Gille Hrabal Partnerschaftsgesellschaft mbB Patentanwälte
(86) International application number: PCT/KR2023/011831
(87) International publication number: WO 2024/101602

(57) **Abstract**

A secondary battery with excellent electrochemical stability and reversibility of both the lithium-ion insertion and conversion reactions is provided. According to one aspect of the present invention, a secondary battery comprising a cathode including a transition metal-based lithium compound is provided, wherein in the differential capacity (dQ/dV)-voltage (V) graph of the secondary battery, there is no peak value in the range of 3.8 to 4.0V.

## Description

### TECHNICAL FIELD

The present invention relates to a lithium secondary battery comprising an amorphous cathode active material and, more specifically, to a high-capacity lithium secondary battery with excellent reversibility of lithium-ion insertion and conversion reactions.

### BACKGROUND ART

Recently, the miniaturization of electronic devices has been rapidly progressing, and there is an increasing demand for secondary batteries that are small, lightweight, and have a high energy density as power sources for these devices. Additionally, in recent years, the development and commercialization of electric vehicles and hybrid vehicles have been carried out for the betterment of the global environment, increasing the demand for lithium-ion secondary batteries with excellent storage characteristics for large-scale applications. In this context, lithium-ion secondary batteries, which have the advantage of large charge/discharge capacity, are gaining attention.

Conventionally, cathode active materials useful for high-energy lithium-ion secondary batteries with a voltage of around 4V include spinel-structured LiMn₂O₄, zigzag-layered LiMnO₂, layered salt-type LiCoO₂, and LiNiO₂, which are generally known. Among them, lithium-ion secondary batteries using LiNiO₂ have attracted attention as batteries with high charge/discharge capacity. However, because these materials have poor thermal stability and cycle characteristics during charging, improvements in the characteristics of the material layers are required.

### DISCLOSURE OF THE INVENTION

### TECHNICAL PROBLEM

The objective of the present invention is to provide a lithium secondary battery including an amorphous cathode active material in which the reversibility of the insertion reaction-conversion reaction of lithium ions can be stably achieved.

Another objective of the present invention is to provide a lithium secondary battery with excellent electrochemical stability.

Yet another objective of the present invention is to provide a lithium secondary battery with excellent long-term cycle stability.

Another objective of the present invention is to provide a lithium secondary battery including a high-capacity electrode.

The objectives of the present invention are not limited to the aforementioned purposes, and other objectives and advantages of the invention that are not mentioned can be understood from the following description and will be more clearly understood through the embodiments of the present invention. Furthermore, it will be apparent that the objectives and advantages of the present invention can be realized by the means and their combinations as set forth in the claims.

### TECHNICAL SOLUTION

The present invention to achieve the above objectives is a secondary battery comprising a cathode including a transition metal-based lithium compound, wherein the secondary battery does not exhibit a peak value in the dQ/dV (differential capacity) - voltage (V) graph of the secondary battery in the range of 3.8 to 4.0V.

In an embodiment of the present invention, the transition metal-based lithium compound may include an amorphous phase.

In an embodiment of the present invention, the dQ/dV - voltage (V) graph of the secondary battery may be obtained from one to five cycles under conditions of 0.01C-rate to 0.5C-rate and 25°C.

In an embodiment of the present invention, the transition metal-based lithium compound may include a compound represented by the following general formula 1.

[General Formula 1] LiₓM₂₋ₓSO₄A

In General Formula 1, M is one or more elements selected from the group consisting of Fe, Mg, Ni, Co, Cr, Ti, Cu, Ca, Zn, Zr, Nb, Mo, Sr, Sb, W, and Bi, and A is a halogen atom, with 0.5 ≤ x ≤ 1.5.

In an embodiment of the present invention, the transition metal-based lithium compound may include LiFeSO₄F.

In an embodiment of the present invention, the particle size (D50) of the transition metal-based lithium compound may be in the range of 0.5 to 3.0 µm.

In an embodiment of the present invention, the transition metal-based lithium compound may include an amorphous matrix and crystallite grains.

In an embodiment of the present invention, the crystallite grains may include a plurality of grains, and the average size of each grain may be in the range of 4 to 8 nm.

In an embodiment of the present invention, the dQ/dV - voltage (V) graph of the secondary battery may have a first peak in the range of 2.5 to 2.7V.

In an embodiment of the present invention, the dQ/dV - voltage (V) graph of the secondary battery may have a second peak in the range of 2.1 to 2.3V.

In an embodiment of the present invention, a secondary battery may further include a cathode, a separator interposed between the cathode and anode, and an electrolyte.

The solution to the problem is not an exhaustive list of all the features of the present invention. Various features of the present invention and their corresponding advantages and effects can be more thoroughly understood with reference to the specific embodiments described below.

### ADVANTAGEOUS EFFECTS

According to one aspect of the present invention, excellent cycle performance with electrochemical stability can be achieved without the need for additional processing steps.

According to another aspect of the present invention, despite significant rearrangement of bonds expected to occur during the conversion reaction, the insertion reaction of lithium ions in the electrode is stably maintained without significant performance degradation, thereby providing a secondary battery in which reversibility is stably achieved.

In addition to the aforementioned effects, the specific effects of the present invention will be described along with the detailed description of the implementation of the invention.

### BRIEF DESCRIPTION OF THE DRAWINGS

Figure 1 shows the XRD (X-ray diffraction) patterns of LiFeSO₄F from Synthesis Example 1 after ball milling, as well as the LiF-FeSO₄, LiF, and FeSO₄ prior to ball milling in Synthesis Example 1.
Figure 2 shows the Fe K-edge Hard XAS (X-ray absorption spectroscopy) spectra of LiFeSO₄F and FeSO₄ after ball milling in Synthesis Example 1.
Figure 3 shows the radial distribution around Fe for LiFeSO₄F and FeSO₄ after ball milling in Synthesis Example 1.
Figure 4 shows the F K-edge and Fe L3 edge of LiFeSO₄F from Synthesis Example 1 through SXAS (Soft X-ray absorption spectroscopy) analysis.
Figure 5 shows the electron diffraction patterns of LiFeSO₄F and several reference materials (Ref) from Synthesis Example 1.
Figure 6 shows the TEM images of LiFeSO₄F from Synthesis Example 1.
Figure 7 shows the charge/discharge profile of a half-cell according to Manufacturing Example 2.
Figure 8 shows the charge/discharge profile of a half-cell under 60°C according to Comparative Example 1.
Figure 9 shows the charge/discharge profile of a half-cell under 60°C according to Comparative Example 2.
Figure 10 shows the differential capacity curve of a half-cell according to Manufacturing Example 2.
Figure 11a shows the charge/discharge profile over time in the high voltage region (2.2-4.7V) and low voltage region (1.5-2.2V) for the half-cell according to Example 1.
Figure 11b shows the Fe K-edge XANES (X-ray absorption near edge structure) spectrum of the charging process for the half-cell in the high voltage region according to Example 1.
Figure 11c shows the Fe K-edge XANES spectrum of the discharging process for the half-cell in the high voltage region according to Example 1.
Figure 11d shows the Fe K-edge XANES spectrum of the charging process for the half-cell in the low voltage region according to Example 1.
Figure 11e shows the Fe K-edge XANES spectrum of the discharging process for the half-cell in the low voltage region according to Example 1.
Figure 11f shows the Fe K-edge EXAFS (Extended X-ray absorption fine structure) spectrum of Fe metal (Ref), pristine, and the half-cell according to Example 1 when discharged at 1.5V and charged at 2.2V, compared to the Fe metal reference.
Figure 11g shows the TEM images of Fe metal contained in the discharged lithium compound matrix.
Figure 11h shows the F K-edge spectrum of the half-cell according to Example 1 in a fully charged, half-discharged, and fully discharged state.
Figure 11i shows the IR (Infrared spectroscopy) spectrum of the half-cell according to Example 1 in a fully charged, half-discharged, and fully discharged state.
Figure 12 shows the charge/discharge profile of the a-LiFeSO₄F two-step reaction (insertion and conversion reaction) in the half-cell according to Example 1.
Figure 13 shows the electrochemical stability evaluation results of long-term charge/discharge cycles for the half-cell according to Example 1.
Figure 14a shows the charge/discharge profile of the half-cell according to Example 1 at current densities of 0.02A/g, 0.05A/g, 0.1A/g, 0.2A/g, 0.5A/g, 1A/g, and 2A/g.
Figure 14b shows the discharge capacity as a function of cycle number for the half-cell according to Example 1 at 60°C and current densities of 0.02A/g, 0.05A/g, 0.1A/g, 0.2A/g, 0.5A/g, 1A/g, and 2A/g.

### MODE FOR CARRYING OUT THE INVENTION

In this specification, unless clearly stated otherwise in context, the singular expressions include the plural.

In this specification, the numerical range indicated by the term 'to' includes the values before and after the term as the lower and upper limits, respectively. If multiple numerical values are disclosed as the upper and lower limits of a certain numerical range, the range disclosed in this specification can be understood as any range having one value from the multiple lower limits as the lower limit and one value from the multiple upper limits as the upper limit.

In this specification, the expression 'no peak exists' in the dQ/dV (differential capacity) - voltage (V) graph means that, according to common knowledge in the technical field, no peak is observed in that voltage range.

According to one aspect of the present invention, a secondary battery comprising a cathode including a transition metal-based lithium compound is provided, where the dQ/dV - voltage (V) graph of the secondary battery does not exhibit a peak value in the range of 3.8 to 4.0V. If a peak value exists in the range of 3.8 to 4.0V in the dQ/dV - voltage (V) graph of the secondary battery, there may be a problem in which the entire capacity of the recharged secondary battery is difficult to exhibit electrochemical activity in the low voltage region. Additionally, conventional electrodes based solely on conversion reactions have faced problems in maintaining stable capacity due to side effects such as significant volume changes associated with the conversion reaction, compositional inhomogeneity, transition metal dissolution, electrolyte decomposition, and formation of cathode electrolyte interphase (CEI) films. To address these issues, the reversibility could be improved by alleviating some of these side effects, but additional processing steps such as surface protective layers, three-dimensional cathode structures, or advanced electrolyte systems were required. According to one aspect of the present invention, without these additional processing steps, electrochemically stable cycle performance can be achieved through the amorphous phase cathode active material with a layered structure. According to another aspect of the present invention, despite significant bond rearrangements expected during the conversion reaction, the insertion reaction of lithium ions in the electrode is stably maintained without significant performance degradation, thereby providing a secondary battery where reversibility is stably achieved.

Hereinafter, the configuration of the present invention will be described in more detail.

### Cathode and secondary battery containing the same

The secondary battery according to the present invention includes a cathode. Specifically, the cathode includes a transition metal-based lithium compound.

The dQ/dV - voltage (V) graph represents the differential capacity dQ/dV with respect to the voltage (V) based on the results of time and voltage from a constant current test. Factors that can influence such a dQ/dV - voltage (V) graph include various factors such as the composition of the cathode active material, temperature, discharge rate, charging method, charging time, and the magnitude of the charging current.

In the dQ/dV - voltage (V) graph of the secondary battery according to the present invention, no peak value exists in the range of 3.8 to 4.0V, specifically at 3.9V.

Meanwhile, the dQ/dV - voltage (V) graph of the secondary battery may be obtained from one to five cycles under conditions of 0.01C-rate to 0.5C-rate and 25°C.

The transition metal-based lithium compound according to the present invention is a compound in which the elements of the cathode active material are located in a layered structure, and lithium ions are inserted or de-intercalated between the layers depending on the charge/discharge process. Specifically, the lithium ions may be de-intercalated from the lattice as the secondary battery charges, and during discharge, the lithium ions may be inserted into the lattice.

According to one embodiment of the present invention, the transition metal-based lithium compound may include an amorphous phase. The amorphous phase refers to a phase that lacks a crystalline structure. Specifically, by including an amorphous phase in the transition metal-based lithium compound, electrochemically stable cycle performance can be achieved, and despite significant rearrangement of bonds expected during the conversion reaction, the insertion reaction of lithium ions in the electrode can be stably maintained without significant performance degradation. Specifically, the amorphous characteristics of the transition metal-based lithium compound can contribute to the maintenance of the lithium-ion insertion reaction even after repeated conversion reactions in the secondary battery. If the transition metal-based lithium compound includes LiFeSO₄F, the substitution/diffusion of Fe²⁺ may occur much more easily due to the amorphous nature compared to a crystalline form. As a result, the ease of Fe²⁺ substitution/diffusion affects the electrode's dynamics, ultimately enabling the reversible lithium-ion insertion reaction-conversion reaction to proceed effectively.

For example, methods such as XRD (X-ray diffraction) analysis or XAS (X-ray absorption spectroscopy) analysis can be used to analyze the crystal structure of the transition metal-based lithium compound.

According to another embodiment of the present invention, the transition metal-based lithium compound may include a compound represented by the following general formula 1.

[General Formula 1] LiₓM₂₋ₓSO₄A

In General Formula 1, M is one or more elements selected from the group consisting of Fe, Mg, Ni, Co, Cr, Ti, Cu, Ca, Zn, Zr, Nb, Mo, Sr, Sb, W, and Bi, and A is a halogen atom, with 0.5 ≤ x ≤ 1.5. Specifically, A may be a halogen atom that can combine with lithium ions to form a salt structure.

For example, the transition metal-based lithium compound may include LiFeSO₄F. When LiFeSO₄F is used as the transition metal-based lithium compound, high reversibility and stability can be achieved, ensuring that the lithium-ion insertion reaction is well maintained even after repeated conversion reactions in the secondary battery. For example, the lithium-ion insertion reaction and conversion reaction may proceed as shown in the following reaction equations 1 and 2.

[Reaction Equation 1] a-FeSO₄F + Li⁺ + e⁻ → a-LiFeSO₄F (lithium-ion insertion reaction)

[Reaction Equation 2] a-LiFeSO₄F + 2Li⁺ + 2e⁻ → Fe + LiSO₃F + Li₂O (conversion reaction)

According to another embodiment of the present invention, the particle size (D50) of the transition metal-based lithium compound may be in the range of 0.5 to 3.0 µm, 0.7 to 2.8 µm, 0.8 to 2.7 µm, 0.9 to 2.6 µm, or 1.0 to 2.5 µm. When the particle size of the transition metal-based lithium compound satisfies the above numerical ranges, the dispersibility of the cathode active material in the cathode slurry can be improved.

According to another embodiment of the present invention, the transition metal-based lithium compound may include an amorphous matrix and crystallite grains. Specifically, the amorphous matrix refers to a phase without a crystalline structure formed within the structure of the transition metal-based lithium compound, and the crystallite grains may include grains with a crystalline structure.

According to another embodiment of the present invention, the crystallite grains may include a plurality of grains. The average size of each of these grains may be 8 nm or less, in the range of 4 to 8 nm, in the range of 5 to 7 nm, or in the range of 6 to 7 nm. Specifically, when the average size of each grain satisfies the numerical ranges, the reversible lithium-ion insertion reaction-conversion reaction can proceed effectively.

According to another embodiment of the present invention, the dQ/dV - voltage (V) graph of the secondary battery may exhibit a first peak in the range of 2.5 to 2.7V, and specifically, the first peak may be present at 2.6V. Here, the first peak refers to the peak in the charge curve of the dQ/dV - voltage (V) graph.

According to another embodiment of the present invention, the dQ/dV - voltage (V) graph of the secondary battery may exhibit a second peak in the range of 2.1 to 2.3V, and specifically, the second peak may be present at 2.2V. Here, the second peak refers to the peak in the discharge curve of the dQ/dV - voltage (V) graph.

According to another embodiment of the present invention, the reversible capacity of the secondary battery may be 360 mAh/g or higher. Specifically, the reversible capacity may refer to the value obtained by subtracting the irreversibly lost capacity from the charge capacity of the cathode active material.

According to another embodiment of the present invention, the capacity retention rate of the secondary battery may be 90% or higher at 25°C after 200 cycles, or 98% or higher at 60°C. Meanwhile, the capacity retention rate refers to the value representing the ratio of the maximum capacity to the designed capacity of the secondary battery.

According to another embodiment of the present invention, a method for preparing the cathode active material may be provided.

The method for preparing the cathode active material according to the present invention may include the steps of: (S1) preparing a precursor comprising a lithium salt and an anhydrous transition metal sulfate; and (S2) grinding the precursor and then subjecting it to heat treatment.

In the (S1) step, if a transition metal sulfate containing water is used instead of an anhydrous transition metal sulfate, the cathode active material ultimately produced may fail to form an amorphous phase. As a result, there may be a problem in which the reversible stability of the lithium-ion insertion reaction-conversion reaction is not sufficiently improved. According to another aspect of the present invention, by preparing an anhydrous transition metal sulfate as a precursor, the amorphous phase cathode active material can be effectively formed.

For example, the lithium salt may include any one selected from the group consisting of LiF, LiCl, and combinations thereof, and specifically, it may include LiF.

For example, the transition metal in the anhydrous transition metal sulfate may include one or more selected from Fe, Mg, Ni, Co, Cr, Ti, Cu, Ca, Zn, Zr, Nb, Mo, Sr, Sb, W, and Bi.

Optionally, the precursor may further include graphite.

In the (S2) step, various types of grinders commonly used in the art can be used as the means for grinding the precursor, and specifically, a ball mill may be used. The (S2) step may include grinding the precursor at a rotational speed of 300 to 500 rpm for 30 to 50 hours.

The step of heat-treating the ground material in the (S2) step may include heating the material at a heating rate of 1 to 3°C/min at 200 to 400°C for 60 to 80 hours. Specifically, when the combination of the anhydrous transition metal sulfate and the conditions of the heat treatment step is satisfied, an amorphous phase cathode active material can be produced.

### Separator

The separator according to the present invention may include a porous substrate or a fiberglass filter paper.

The separator according to the present invention can electrically insulate the anode and cathode to prevent short-circuiting while providing a pathway for the movement of lithium ions. It may be a porous structure with high resistance to the electrolyte and fine pore diameters.

The material for the porous substrate can be an organic or inorganic material with electrical insulation properties and is not specifically limited. The porous substrate may include, for example, at least one selected from the group consisting of polypropylene, polyethylene terephthalate, polybutylene terephthalate, polyacetal, polyamide, polycarbonate, polyimide, polyphenylene ether ketone, polyethersulfone, polyphenylene oxide, polyphenylene sulfide, and polyethylene naphthalene, and specifically, may include polypropylene. Polyolefin not only has excellent coating properties but also allows for a thinner separator, increasing the ratio of the electrode active material layer within the cell and thereby enhancing the volumetric capacity. Specifically, the weight average molecular weight (Mw) of the polyolefin may range from 100,000 to 500,000 g/mol. If the weight average molecular weight of the polyolefin is below this range, it may be difficult to secure sufficient mechanical properties, and if it exceeds this range, the shutdown function may not be implemented, or molding may become difficult. The shutdown function refers to the ability to prevent thermal runaway in the secondary battery when the temperature increases. It is achieved by the thermoplastic resin melting and closing the pores of the porous substrate, thereby blocking ion movement.

The thickness of the porous substrate may, for example, be in the range of 3 to 50 µm or 4 to 15 µm. If the thickness of the porous substrate is below this range, the conductive barrier function may not be sufficient, and if the thickness exceeds this range, the resistance of the separator may increase excessively.

The average diameter of the pores included in the porous substrate may, for example, be in the range of 10 to 100 nm. The pores in the porous substrate are structured in such a way that they are interconnected, allowing gas or liquid to pass from one surface of the porous substrate to the other.

The separator according to the present invention may further include a coating layer disposed on at least one surface of the porous substrate.

The coating layer according to the present invention can improve the mechanical strength and heat resistance of the separator for the secondary battery, and enhance the ion conductivity within the secondary battery.

The coating layer according to the present invention may include a binder polymer and inorganic particles.

The binder polymer according to the present invention can connect and securely fix the inorganic particles. The binder polymer may include, for example, Polyvinylidene fluoride-co-hexafluoropropylene (PVDF-co-HFP), Polyvinylidene fluoride-co-trichloroethylene (PVDF-co-TCE), Polymethylmethacrylate (PMMA), Polyacrylonitrile (PAN), Polyvinylpyrrolidone (PVP), Polyvinylacetate (PVA), Poly(ethylene-co-vinyl acetate), Polyethylene oxide (PEO), Cellulose acetate, Cellulose acetate butyrate, Cellulose acetate propionate, Cyanoethylpullulan, Cyanoethylpolyvinylalcohol, Cyanoethylcellulose, Cyanoethylsucrose, Pullulan, Carboxyl methyl cellulose, Acrylonitrile-styrene butadiene copolymer, Polyimide, and Styrene-butadiene rubber, and may be used by mixing one or more selected from the group consisting of these.

The inorganic particles according to the present invention can contribute to improving the mechanical strength and heat resistance of the separator for the secondary battery. Specifically, the inorganic particles are not particularly limited as long as they are electrochemically stable. In other words, the inorganic particles that can be used in the present invention are not specifically limited, provided that oxidation and/or reduction reactions do not occur within the operating voltage range of the secondary battery (e.g., 0-5V with respect to Li/Li⁺).

As an example, when using inorganic particles with a high dielectric constant as the inorganic particles, they can contribute to an increase in the dissociation of the electrolyte salt, such as lithium salts, in the liquid electrolyte, thereby enhancing the ion conductivity of the electrolyte. Due to the reasons mentioned above, the inorganic particles may be those with a dielectric constant of 5 or higher, inorganic particles with lithium-ion conductivity, or a mixture of these.

The inorganic particles with a dielectric constant of 5 or higher may be selected from the group consisting ofAl₂O₃, SiO₂, ZrO₂, AlO(OH), Al(OH)₃, Mg(OH)₂, BaSO₄, TiO₂, BaTiO₃, Pb(ZrₓTi₁₋ₓ)O₃ (PZT, where 0 < x < 1), Pb₁₋ₓLaₓZr_{1-y}Ti_{y}O₃ (PLZT, where 0 < x < 1, 0 < y < 1), (1-x)Pb(Mg_{1/3}Nb_{2/3})O₃₋ₓPbTiO₃ (PMN-PT, where 0 < x < 1), HfO₂, SrTiO₃, SnO₂, CeO₂, MgO, NiO, CaO, ZnO, and SiC, and may be a mixture of one or more selected from these.

The inorganic particles with lithium-ion conductivity may be selected from the group consisting of lithium phosphate (Li₃PO₄), lithium titanium phosphate (LiₓTi_{y}(PO₄)₃, where 0 < x < 2, 0 < y < 3), lithium aluminum titanium phosphate (LiₓAl_{y}Ti_{z}(PO₄)₃, where 0 < x < 2, 0 < y < 1, 0 < z < 3), (LiAlTiP)ₓO_{y} series glass (where 0 < x < 4, 0 < y < 13), lithium lanthanum titanate (LiₓLa_{y}TiO₃, where 0 < x < 2, 0 < y < 3), lithium germanium thiophosphate (LiₓGe_{y}P_{z}S_{w}, where 0 < x < 4, 0 < y < 1, 0 < z < 1, 0 < w < 5), lithium nitride (LiₓN_{y}, where 0 < x < 4, 0 < y < 2), SiS2 series glass (LiₓSi_{y}S_{z}, where 0 < x < 3, 0 < y < 2, 0 < z < 4), and P₂S₅ series glass (LiₓP_{y}S_{z}, where 0 < x < 3, 0 < y < 3, 0 < z < 7), and may be a mixture of one or more selected from these.

For example, the average particle size (D50) of the inorganic particles may range from 1 nm to 10 µm to ensure the formation of a uniform coating layer and appropriate porosity. Specifically, it may range from 10 nm to 2 µm, and more specifically, from 50 nm to 1 µm. The term 'average particle size (D50)' refers to the particle size at the 50% point of the cumulative distribution of the particle number according to the particle size. The average particle size can be measured using the laser diffraction method. Specifically, the powder to be measured is dispersed in a dispersant and then introduced into a commercially available laser diffraction particle size measurement device (e.g., Microtrac S3500) to measure the differences in diffraction patterns as the particles pass through the laser beam, and the particle size distribution can be calculated.

For example, the thickness of the coating layer may range from 0.1 to 10 µm, specifically from 1 to 3 µm, and more specifically from 1.4 to 1.6 µm. When the thickness of the coating layer satisfies these numerical ranges, it can improve the insulation and thermal stability of the separator while simultaneously enhancing the energy density of the battery.

For example, the packing density of the coating layer may range from 0.1 to 20 g/cm³, specifically from 0.5 to 12 g/cm³, and more specifically from 1 to 3 g/cm³. When the packing density of the coating layer satisfies these numerical ranges, the permeability of lithium ions may be favorable, and the thermal stability of the separator can be maintained at an appropriate level. Meanwhile, the packing density refers to the density of the coating layer loaded to a height of 1 µm per unit area (m²) of the porous substrate.

### Anode

Anode according to one embodiment of the present invention may include lithium metal (Li metal).

According to another embodiment of the present invention, the anode may include an anode current collector and an anode active material layer disposed on at least one surface of the anode current collector. The anode active material layer may include anode active material, conductive material, and anode binder.

The anode current collector can serve as a path for transferring electrons from the outside to enable electrochemical reactions in the anode active material, or for receiving electrons from the anode active material and sending them outside. For example, materials such as copper, stainless steel, aluminum, nickel, titanium, sintered carbon, or those treated with carbon, nickel, titanium, silver, etc., on the surface of aluminum or stainless steel may be used as the anode current collector. Specifically, transition metals that strongly adsorb carbon, such as copper or nickel, can be used as the current collector. For example, the thickness of the anode current collector may range from 6 µm to 20 µm, but the thickness is not limited to this range.

The anode active material can serve the role of storing or releasing lithium ions and generating electricity. For example, the anode active material may include at least one of silicon-based active material particles and graphite-based active material particles.

The silicon-based active material particles may include at least one selected from the group consisting of Si, SiOx (0 < x ≤ 2), Si-C composite, and Si-Y alloy (where Y is an element selected from the group consisting of alkali metals, alkali earth metals, transition metals, Group 13 elements, Group 14 elements, and rare earth elements).

The graphite-based active material particles may include at least one selected from the group consisting of artificial graphite, natural graphite, graphitized carbon fibers, and graphitized mesocarbon microbeads.

The content of the anode active material may be in the range of 80 to 97 wt% based on the total solid content in the anode active material layer.

The conductive material can improve the conductivity between the active material particles in the electrode or with the metal current collector, and prevent the binder from acting as an insulator. The conductive material may include, for example, at least one or a mixture of two or more conductive materials selected from the group consisting of graphite, carbon black, carbon fibers, metal fibers, metal powders, conductive whiskers, conductive metal oxides, activated carbon, and polyphenylene derivatives. More specifically, the conductive material may include at least one or a mixture of two or more conductive materials selected from the group consisting of natural graphite, artificial graphite, super P (super-p), acetylene black, ketjen black, channel black, furnace black, lamp black, summer black, Denka black, aluminum powder, nickel powder, zinc oxide, potassium titanate, and titanium oxide.

"The anode binder can help suppress the separation between the anode active material particles or between the anode and the current collector. The anode binder may be a polymer commonly used for electrodes in the art. Non-limiting examples of such anode binders include poly(vinylidene fluoride-co-hexafluoropropylene), poly(vinylidene fluoride-co-trichloroethylene), poly(methylmethacrylate), poly(ethylhexylacrylate), poly(butylacrylate), poly(acrylonitrile), poly(vinylpyrrolidone), poly(vinyl acetate), poly(ethylene-co-vinyl acetate), poly(ethylene oxide), polyacrylate, cellulose acetate, cellulose acetate butyrate, cellulose acetate propionate, cyanoethylpullulan, cyanoethylpoly(vinylalcohol), cyanoethylcellulose, cyanoethylsucrose, pullulan, and carboxyl methyl cellulose, among others, but the invention is not limited to these.

### Electrolyte

The electrolyte according to the present invention may include a solvent and a lithium salt.

The solvent according to the present invention may include at least one or a mixture of two or more selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (GBL), fluoroethylene carbonate (FEC), formic acid methyl, formic acid ethyl, formic acid propyl, acetic acid methyl, acetic acid ethyl, acetic acid propyl, acetic acid pentyl, propionic acid methyl, propionic acid ethyl, propionic acid ethyl, and propionic acid butyl.

The lithium salt according to the present invention may include anions such as NO₃⁻, F⁻, Cl⁻, Br⁻, I⁻, PF₆⁻, for example.

The electrolyte according to the present invention may further include an additive, and specifically, may include a compound comprising fluorine atoms. For example, the additive may include at least one selected from the group consisting of LiBF₄, LiTFSI, and LiFSI. Here, LiTFSI and LiFSI can form a lithium fluoride (LiF)-rich passive film on the surface of lithium metal through corrosion, which can improve the ionic conductivity of lithium ions.

### Application

According to another embodiment of the present invention, a device may be provided, which includes a battery module comprising the secondary battery as a unit cell, a battery pack including the battery module, and a device powered by the battery pack. Specific examples of the device include a power tool that operates by receiving power from an electric motor; an electric vehicle (EV), a hybrid electric vehicle (HEV), a plug-in hybrid electric vehicle (PHEV), etc.; an electric two-wheeled vehicle, such as an electric bicycle (E-bike) or electric scooter (E-scooter); an electric golf cart; a power storage system, and the like, but the invention is not limited to these.

Hereinafter, the embodiments of the present invention will be described in detail to enable those skilled in the art to easily practice the invention. However, these are merely examples, and the scope of the present invention is not limited by the following description.

### [Synthesis Example: Synthesis of Cathode Active Material]

### <Synthesis Example 1: Synthesis of a-LiFeSO₄F>

FeSO₄·7H₂O (Sigma-Aldrich) was dehydrated at 300°C for 12 hours under an argon atmosphere to produce FeSO₄. Then, LiF and FeSO₄, mixed in a 1:1 molar ratio, along with 20 wt% graphite (Bay Carbon Inc.), were placed in a bowl of a ball mill (Pulverisette 5; Fritsch) and sealed in a glove box filled with argon (H₂O, O₂ < 1 ppm). To prevent side reactions due to high temperatures, the powder in the bowl was ball-milled at 400 rpm for 48 hours, with 5 minutes of rest every 30 minutes. The ball-milled pellets were then heated at a rate of 2°C/min to 300°C and held at that temperature for 72 hours to finally synthesize the amorphous LiFeSO₄F (a-LiFeSO₄F).

### <Comparative Synthesis Example 1: Synthesis of LiFeSO₄F on Tavorite>

For the Tavorite phase LiFeSO4F, FeSO₄·H₂O was prepared by dehydrating FeSO₄·7H₂O (Sigma-Aldrich) in EMI-TFSI (1-Ethyl-3-methylimidazolium bis(trifluoromethylsulfonyl)imide) ionic liquid at 110°C for 2 to 3 hours. After ball milling the FeSO₄·H₂O and LiF in a 1:1 molar ratio for 11 minutes, the ball-milled sample (pellets) was heated at a rate of 2°C/min to 300°C and held at that temperature for 72 hours to finally synthesize LiFeSO₄F in the Tavorite phase.

### <Comparative Synthesis Example 2: Synthesis of LiFeSO₄F in the Triplite Phase>

For the Triplite phase LiFeSO₄F, LiF and the prepared FeSO₄·H₂O were mixed in a 1.05:1 molar ratio and ball-milled in anhydrous ethanol for 2 hours, then dried at 60°C under vacuum for 12 hours. The dried sample (pellets) was heated at 450°C for 45 minutes, followed by an additional 90 minutes of heating to finally synthesize LiFeSO₄F in the Triplite phase.

### [Experimental Example 1: XRD Pattern Analysis]

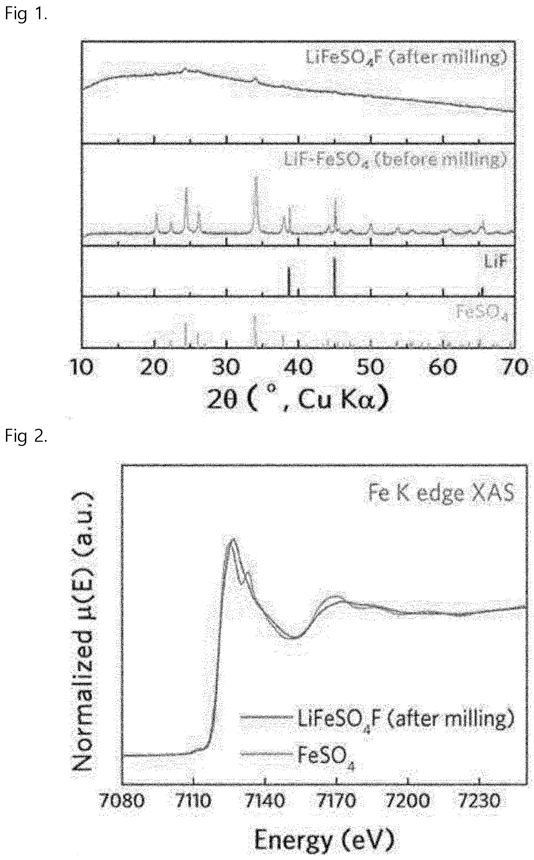

Figure 1 shows the XRD (X-ray diffraction) patterns of LiFeSO₄F from Synthesis Example 1 after ball milling, as well as the XRD patterns of LiF-FeSO₄, LiF, and FeSO₄ before ball milling in Synthesis Example 1. The XRD patterns of the samples were collected using a D8 ADVANCE 2020 (Bruker) equipped with Cu Kα radiation (λ = 1.54178 Å), with a step size of 0.005° and a scan speed of 0.15°/min in the 2θ range of 15° to 70°.

Referring to Figure 1, it can be seen that the mixture containing crystalline LiF and FeSO₄ precursors is converted to an amorphous phase after ball milling.

### [Manufacturing Example 1: Manufacturing of Cathode]

### <Example 1: Cathode Comprising the Cathode Active Material from Synthesis Example 1>

### Manufacturing of Cathode Slurry

The cathode active material (a-LiFeSO₄F) from Synthesis Example 1, polyacrylonitrile (Polyacrylonitrile; PAN), and conductive carbon (Super P; Timcal, Bodio, Switzerland) were mixed in a weight ratio of 7:2:1, and the mixture was added to N-methyl-2-pyrrolidone (N-Methyl-2-pyrrolidone; NMP, 99.5%; Sigma Aldrich) to prepare the cathode slurry.

### Manufacturing of Cathode by Coating the Cathode Slurry onto the Current Collector

The prepared cathode slurry was cast onto one side of an aluminum foil (Al foil) with a loading amount of 2.7 to 3.0 mg/cm², and then vacuum-dried at 60°C to produce a cathode with a total thickness of 32 µm.

### <Comparative Example 1: Cathode Comprising the Cathode Active Material (Tavorite phase) from Comparative Synthesis Example 1>

The cathode was manufactured using the same method as in Example 1, except that the cathode active material from Comparative Synthesis Example 1 was used instead of the cathode active material from Synthesis Example 1.

### <Comparative Example 2: Cathode Comprising the Cathode Active Material (Triplite phase) from Comparative Synthesis Example 2>

The cathode was manufactured using the same method as in Example 1, except that the cathode active material from Comparative Synthesis Example 2 was used instead of the cathode active material from Synthesis Example 1.

### [Manufacturing Example 2: Manufacturing of Half-Cell]

Li metal (Li metal) was used as the anode, a fiberglass filter (GF/F filter) was used as the separator, and the electrodes from Example 1, Comparative Example 1, and Comparative Example 2 were used as the cathode. The electrolyte was prepared by dissolving 1M LiPF₆ in a mixed solvent of ethylene carbonate (EC) and dimethyl carbonate (DMC) in a 1:1 (v/v) volume ratio. A coin cell (CR2032, Hohsen Corp.) was then fabricated. Specifically, the anode and cathode were arranged with the separator interposed between them, placed into a glove box filled with argon (H₂O, O₂ <1 ppm), and the electrolyte was injected to fabricate the coin cell.

### [Experimental Example 2: XAS Spectrum Analysis]

Figure 2 shows the Fe K-edge Hard XAS (X-ray absorption spectroscopy) spectra of LiFeSO₄F and FeSO₄ from Synthesis Example 1 after ball milling. For the Fe K-edge XAS analysis, the coin cell (CR2032) was charged or discharged to a certain State of Charge (SOC), and then disassembled in an argon-filled glove box. The anode was then washed with dimethyl carbonate (DMC) and sealed with a Kapton film. The Fe K-edge XAS analysis was performed at the Pohang Light Source-II (PLS-II) using the 7D XAFS, 8C nano XAFS, and 10C wide XAFS beamlines. All Fe K-edge XAS spectra were measured in transmission mode, and the Fe spectra were simultaneously referenced to correct the energy. The storage ring operated at 3.0 GeV with a ring current of 300 mA in top-up mode.

Referring to Figure 2, it can be seen that the Fe K-edge spectra of a-LiFeSO₄F and FeSO₄ are clearly distinguishable at approximately 7127-7200 eV, which represents the Fe structure.

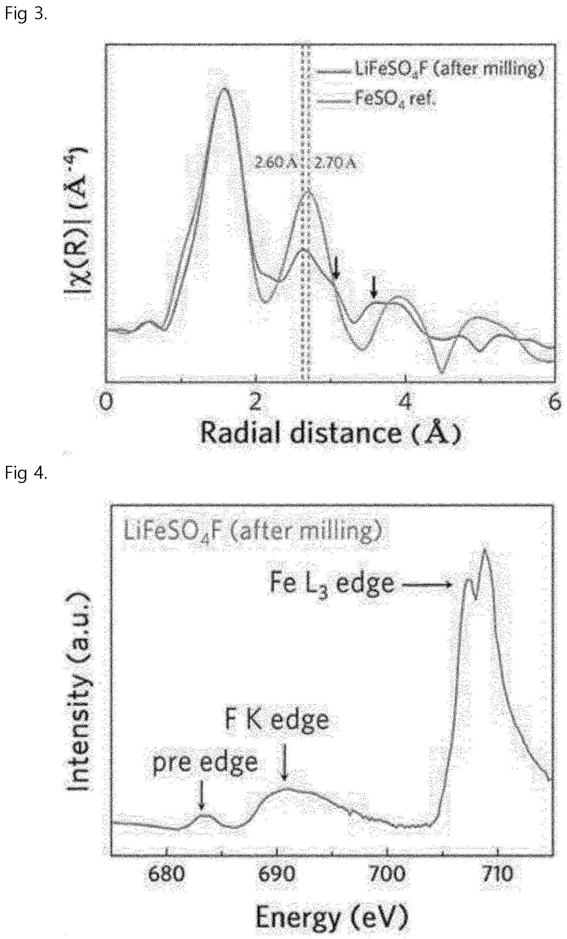

Figure 3 shows the radial distribution around Fe for LiFeSO₄F and FeSO₄ from Synthesis Example 1 after ball milling.

Referring to Figure 3, it can be observed that LiFeSO₄F from Synthesis Example 1 exhibits a different radial distribution compared to the initial FeSO₄ phase. Additional shoulder peaks were clearly observed at approximately 3.01 and 3.60 Å, indicating changes in the adjacent bond. The second adjacent bond distance (~2.6 Å) of a-LiFeSO₄F was found to be slightly shorter than that of the initial pure FeSO₄ phase (~2.7 Å).

Figure 4 shows the F K-edge and Fe L3 edge from SXAS (Soft X-ray absorption spectroscopy) analysis of LiFeSO₄F from Synthesis Example 1. For the analysis of the F K-edge and Fe L₃ edge, the coin cell (CR2032) from Manufacturing Example 2 was charged or discharged to a certain SOC and then disassembled in an argon-filled glove box. The anode was then washed with DMC, and the anode was carefully scraped to collect the anode powder. The collected anode powder was sonicated in DMC, and the sonicated powder was dropped onto a TEM sample grid. The STXM analysis was performed at the 10A2 HR-PES beamline of PLS-II, and the storage ring operated at 3.0 GeV with a ring current of 300 mA in top-up mode.

Referring to Figure 4, it can be observed that a new fluorine bonding peak in LiFeSO₄F from Synthesis Example 1 is detected through the SXAS spectrum. Specifically, the spectrum shows the presence of a pre-edge peak at 683.5 eV that appears after the ball milling process. Considering that this peak is characteristic of Fₗₛ-TM 3d hybrid orbitals, it can be inferred that a new Fe-F bond is formed in LiFeSO₄F from Synthesis Example 1.

### [Experimental Example 3: STXM Analysis and TEM Images]

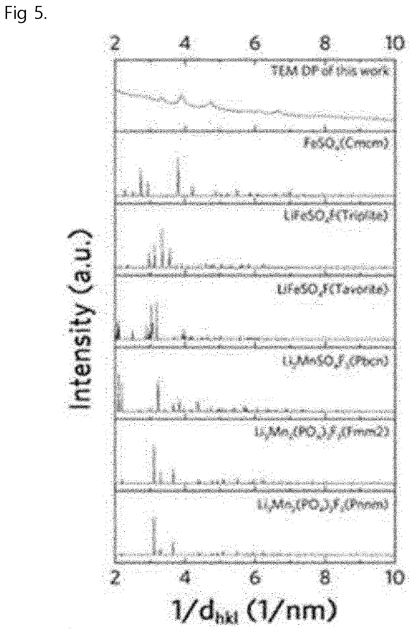

Figure **5** shows the electron diffraction patterns of LiFeSO₄F from Synthesis Example 1 and several reference materials (Ref).

Referring to Figure 5, LiFeSO₄F from Synthesis Example 1 exhibited an electron diffraction pattern distinct from LiFeSO₄F in the Triplite phase and Tavorite phase, and showed peaks that were distinguishable from other cathode active materials with different compositions.

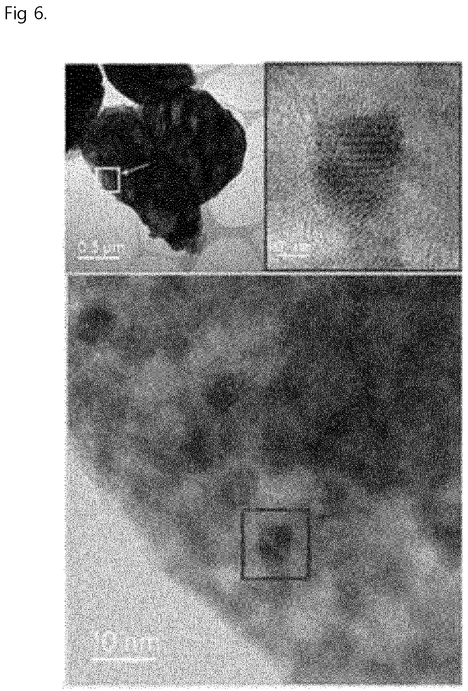

Figure 6 shows the TEM images of LiFeSO₄F from Synthesis Example 1.

Referring to Figure 6, it can be confirmed that LiFeSO₄F from Synthesis Example 1 consists of particles in the range of 0.5 to 3.0 µm, made up of randomly distributed grains of 4 to 8 nm. Here, LiFeSO₄F from Synthesis Example 1 may include some grains that form an amorphous matrix and crystallites.

### [Experimental Example 4-1: Electrochemical Performance Evaluation of Half-Cell - Charge/Discharge Profile]

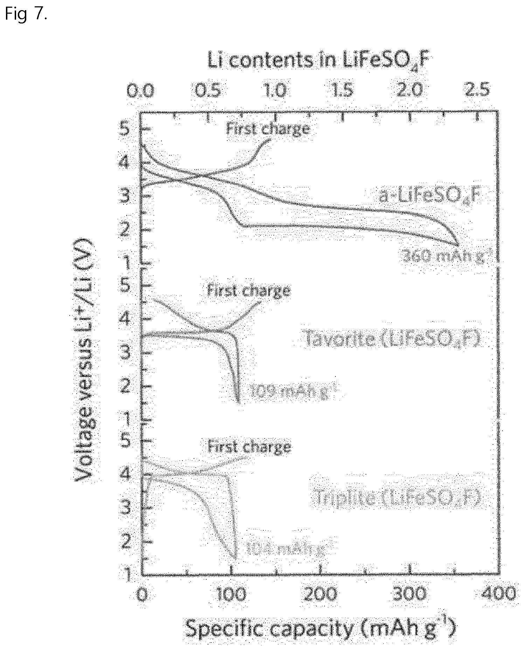

Figure 7 shows the charge/discharge profile of the half-cell (CR2032) according to Manufacturing Example 2. Specifically, the electrochemical characteristics of the half-cell according to Manufacturing Example 2 were measured at 25°C and 60°C under a current density of 40 mA/g and voltage conditions between 1.5 to 4.7 V.

Referring to Figure 7, the half-cell according to Example 1 showed a capacity of 145 mAh/g during the first charge process. For the half-cell according to Example 1, the first discharge reaction started at around 3.9V and exhibited an average discharge voltage of about 3.59V (vs. Li⁺/Li). It can be inferred that the reversible reaction in this voltage range is attributed to the lithium-ion de-intercalation/intercalation of a-LiFeSO₄F and the Fe²⁺/³⁺ oxidation/reduction reactions.

It can be observed that the discharge voltage of the half-cell according to Example 1 is slightly lower compared to the half-cell of Comparative Example 1, which includes LiFeSO₄F in the Tavorite phase (~3.60V), and the half-cell of Comparative Example 2, which includes LiFeSO₄F in the Triplite phase (~3.90V).

Furthermore, the half-cell according to Example 1 exhibited a significantly more sloped voltage profile compared to the half-cells of Comparative Examples 1 and 2, due to the amorphous structural characteristics of the cathode active material. Specifically, for the half-cells of Comparative Examples 1 and 2, oxidation/reduction peaks were observed at approximately 3.60V and 3.90V, respectively. However, for the half-cell of Example 1, no distinct oxidation/reduction peaks were observed in the similar voltage range.

When the half-cells of Example 1, Comparative Example 1, and Comparative Example 2 were discharged to 1.5V (vs. Li⁺/Li), the half-cell of Example 1, unlike those of Comparative Examples 1 and 2, exhibited capacity at a discharge voltage of 2.2V (or 2.6V during charging) due to the inclusion of an amorphous structured cathode active material. This resulted in a cumulative discharge capacity of 360 mAh/g (or an energy density of 906 Wh/kg). In contrast, the half-cells of Comparative Examples 1 and 2 showed little capacity development below 3V, resulting in very low cumulative discharge capacities.

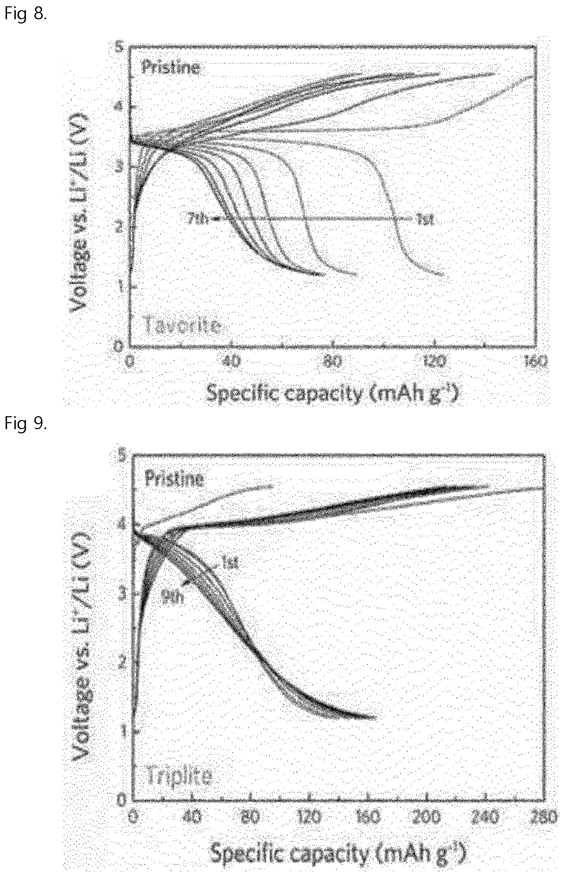

Figure 8 shows the charge/discharge profile of the half-cell of Comparative Example 1 at 60°C.

Figure 9 shows the charge/discharge profile of the half-cell of Comparative Example 2 at 60°C.

Referring to Figures 8 and 9, it can be observed that even when the cutoff voltage is lowered from 1.5V to 1.2V to induce a conversion reaction, the half-cells of Comparative Examples 1 and 2 do not exhibit significant capacity below 3V.

### [Experimental Example 4-2: Electrochemical Performance Evaluation of Half-Cell - Differential Capacity Curve]

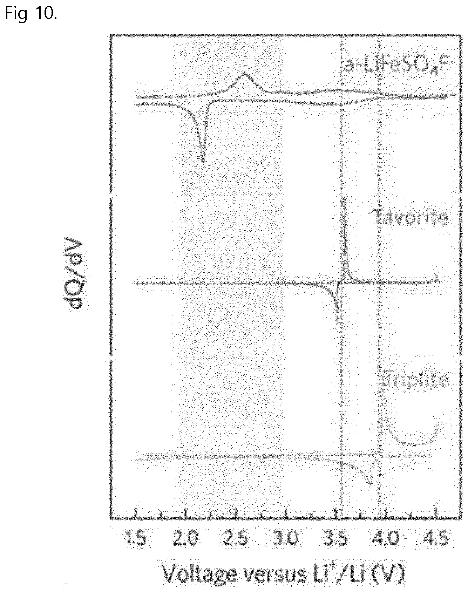

Figure 10 shows the differential capacity curve of the half-cell (CR2032) according to Manufacturing Example 2. The differential capacity curve represents the derivative of capacity (dQ/dV) with respect to voltage, based on the results of time and voltage under constant current conditions.

Referring to Figure 10 and Table 1 below, it can be observed that, unlike the half-cells of Comparative Examples 1 and 2, the half-cell according to Example 1 exhibits a differential capacity (dQ/dV) peak below 3V. Additionally, it shows a nearly constant differential capacity (dQ/dV) at 4.5V, with no corresponding peak observed at 4.5V.

**[Table 1]**

| Category | Example 1 | Comparative Example 1 | Comparative Example 2 |
|---|---|---|---|
| Phase | Amorphous | Tavorite | Triplite |
| Peak at 4.5V | Not observed | Observed | Observed |
| First peak at 2.6V | Observed | Not observed | Not observed |
| (charging) | | | |
| Second peak at 2.2V (discharging) | Observed | Not observed | Not observed |

Furthermore, in the half-cells of Comparative Examples 1 and 2, oxidation/reduction peaks were observed at 3.60V and 3.90V, respectively. However, in the half-cell of Example 1, no distinct peaks were observed in the similar voltage range.

### [Experimental Example 5: Ex-situ Hard XAS (X-ray Absorption Spectroscopy)]

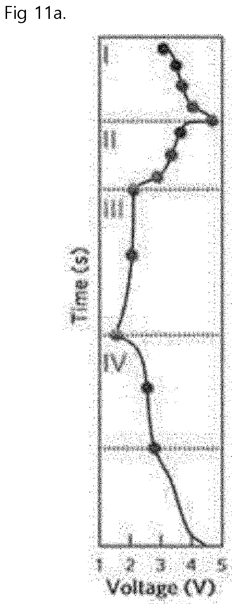

Figure 11a shows the charge/discharge profile over time in the high voltage range (2.2-4.7V) and low voltage range (1.5-2.2V) for the half-cell according to Example 1.

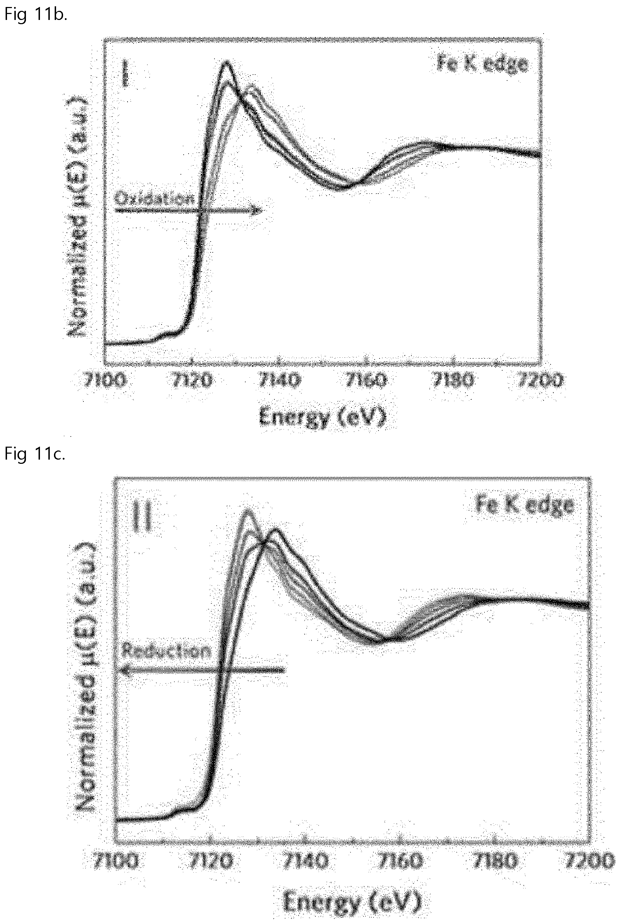

Figure 11b shows the Fe K-edge XANES spectrum for the charging process of the half-cell according to Example 1 in the high voltage range.

Figure 11c shows the Fe K-edge XANES spectrum for the discharging process of the half-cell according to Example 1 in the high voltage range.

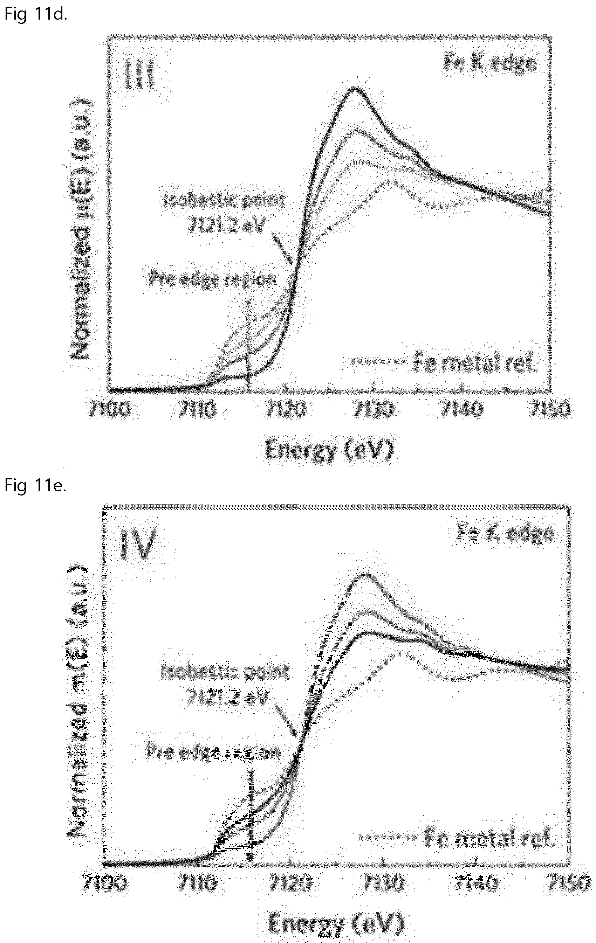

Figure 11d shows the Fe K-edge XANES spectrum for the charging process of the half-cell according to Example 1 in the low voltage range.

Figure 11e shows the Fe K-edge XANES spectrum for the discharging process of the half-cell according to Example 1 in the low voltage range.

The measurement method for Experimental Example 5 was conducted in the same manner as the measurement method for Experimental Example 2.

Referring to Figures 11a to 11c, the Fe K-edge line shifts simply to higher energy values during the charging process and to lower energy values during the discharging process. This suggests that the electrochemical activity in this range is derived from the oxidation/reduction reactions of Fe2+/3+ during the typical lithium-ion insertion/deinsertion process.

Referring to Figures 11a, 11d, and 11e, it can be observed that when the half-cell according to Example 1 is further discharged into the low voltage range, the XAS spectrum of a-LiFeSO₄F shows a changed profile, indicating the characteristics of the Fe0 metallic phase.

As shown in Figure 11e, a reversible reaction was observed during the subsequent charging process. During the electrochemical reactions in this range, an isosbestic point at 7121.2 eV, which matches the Fe metal reference spectrum, was clearly observed. The isosbestic point can appear in XANES (X-ray absorption near-edge structure) when the chemical compositions of the product and reactant remain constant while their relative proportions reversibly change during the two-phase reaction

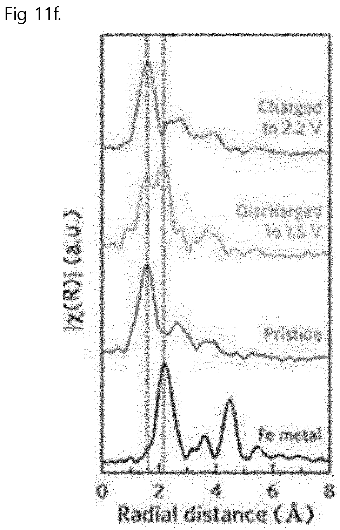

Figure 11f shows the Fe K-edge EXAFS (Extended X-ray Absorption Fine Structure) spectra for Fe metal (Ref), pristine (Pristine), and the half-cell according to Example 1 when discharged to 1.5V and charged to 2.2V, respectively, for each Fe metal reference.

Referring to Figure 11f, EXAFS analysis confirmed the reversible transition reaction of the pristine a-LiFeSO₄F electrode. Specifically, the Fe-Fe bonding peak at 2.2 Å can indicate the appearance of the Fe metallic phase with the discharge of the a-LiFeSO₄F electrode (around 1.5V), which decreased during recharging (around 2.2V). The partial residual intensity at 1.7 Å in the pristine a-LiFeSO₄F electrode is believed to be due to some non-reacted a-LiFeSO₄F after discharge.

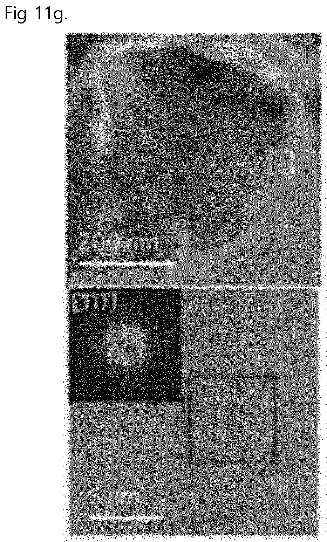

Figure 11g shows the TEM image of Fe metal contained in the discharged lithium compound matrix.

Referring to Figure 11g, the Fe metal segments contained in the lithium compound matrix in the discharged state have particle sizes ranging from 5 to 8 nm, and the crystal lattice is confirmed to be body-centered cubic (BCC) along the [111] axis.

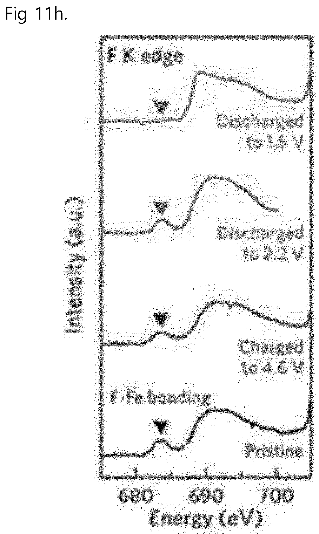

Figure 11h shows the F K-edge spectrum of the half-cell according to Example 1 in the fully charged, half-discharged, and fully discharged states.

Referring to Figure 11h, in order to clarify the conversion reaction occurring in the low voltage range, changes in fluorine local bonding were investigated. The Pre-edge indicating F-Fe bonding in the pristine electrode (triangle symbol) did not change in the high voltage range (> 2.2V), but it significantly decreased during discharge to 1.5V. This decrease is consistent with the dissociation of F-Fe bonds during the conversion reaction. Specifically, in the conversion reaction of fluorine-based compounds, LiF is a common discharge product, but no characteristic LiF signal (~700 eV) was observed in the fully discharged state.

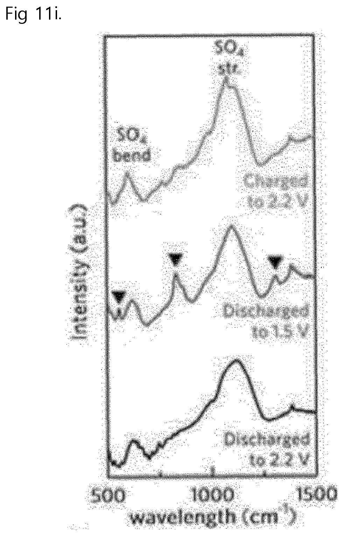

Figure 11i shows the IR (Infrared Spectroscopy) spectrum of the half-cell according to Example 1 in the fully charged, half-discharged, and fully discharged states.

Referring to Figure 11i, the IR analysis results show that the discharge products consist of SO₃F--polyanion-containing compounds. Specifically, when the a-LiFeSO₄F electrode was discharged to 1.5V, new peaks appeared at 559 cm⁻¹, 831 cm⁻¹, and 1,311 cm⁻¹ (triangle symbol), and these peaks were reversibly reduced during recharging. These peaks correspond well with the O-S-O bending vibration (550-590 cm⁻¹), S-F stretching vibration (~800 cm⁻¹), and SO₃ stretching vibration (~1300 cm⁻¹) modes typical of SO₃F⁻-polyanion-containing compounds. These results suggest that the discharge product containing lithium in the conversion reaction is LiSO₃F, and considering the formation of Fe metal and the stoichiometric composition of LiFeSO₄F, it can be inferred that the residual reaction product after discharge is Li₂O.

### [Experimental Example 6: Electrochemical Performance Evaluation of the Half-Cell According to Example 1]

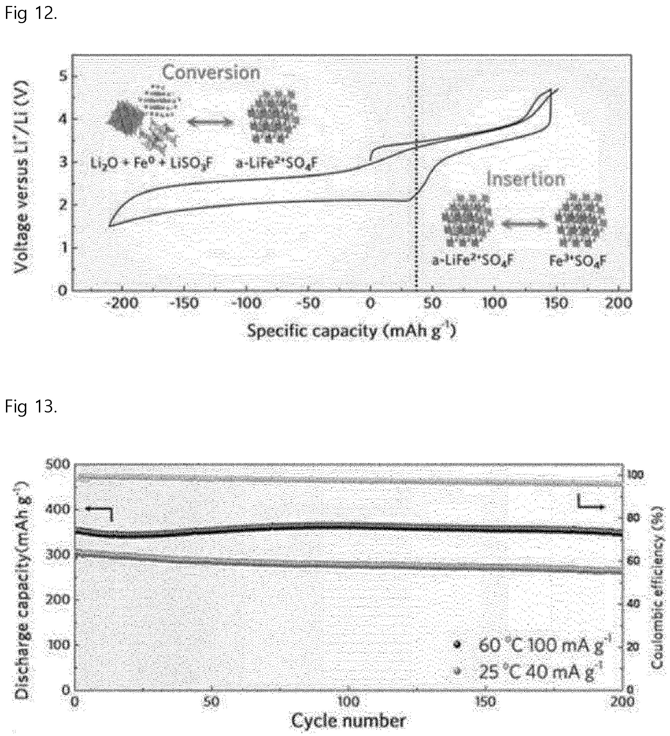

Figure 12 shows the charge/discharge profile of a-LiFeSO₄F for the two-step reaction (insertion and conversion reactions) in the half-cell according to Example 1. Specifically, the measurement method for Experimental Example 6 was the same as the measurement method used in Experimental Example 4-1.

Referring to Figure 12, the lithium-ion insertion reaction proceeds as shown in Reaction 1, and the conversion reaction can proceed as shown in Reaction 2:

[Reaction 1] a-FeSO₄F + Li⁺ + e⁻ → a-LiFeSO₄F (Lithium-ion insertion reaction at 3.59V)

[Reaction 2] a-LiFeSO₄F + 2Li⁺ + 2e⁻→ Fe + LiSO3F + Li₂O (Conversion reaction at 2.18V)

Specifically, the first oxidation-reduction reaction is initiated by an insertion reaction involving the Fe²⁺/³⁺ redox reaction between a-LiFe²⁺SO₄F and Fe³⁺SO₄F. The subsequent oxidation-reduction reaction occurs through a conversion reaction that involves the reversible formation of Fe⁰, LiSO₃F, Li₂O, and a-LiFe²⁺SO₄F, as well as the Fe⁰/²⁺ redox reaction.

Figure 13 shows the electrochemical stability evaluation results of the long-term charge/discharge cycles for the half-cell according to Example 1. Specifically, the electrochemical stability evaluation results assess the capacity retention and coulombic efficiency relative to the number of cycles measured under conditions of 0.01 C-rate to 0.5 C-rate and temperatures (25°C or 60°C).

Referring to Figure 13, at room temperature, the half-cell according to Example 1 showed a capacity of over 300 mAh/g for both reactions and demonstrated a capacity retention of 90% over 200 cycles, indicating stable lithium-ion insertion and conversion reactions over a long period. In contrast to the significant cycle degradation observed with the previously known cathode materials FeF₂ and FeF₃, the electrochemical profile and average voltage of a-LiFeSO₄F were maintained well over 200 cycles without noticeable degradation.

Additionally, the half-cell according to Example 1, which includes the a-LiFeSO₄F cathode, exhibited a higher capacity of approximately 360 mAh/g at 60°C and demonstrated a capacity retention of about 98.6% of the initial capacity after 200 cycles."

On the other hand, conventional electrodes based solely on the conversion reaction have had difficulty achieving stable capacity retention due to various undesirable side effects associated with the conversion reaction, such as significant volume changes, compositional inhomogeneity, transition metal dissolution, and the formation of a cathode passivation layer (CEI) caused by electrolyte decomposition. While some of these side effects have been mitigated to improve reversibility (e.g., using surface protective layers, three-dimensional cathode structures, or advanced electrolyte systems), additional processing steps have been required. According to one aspect of the present invention, however, without such additional processing steps, the amorphous a-LiFeSO₄F demonstrates excellent electrochemical stability and cycle performance. Despite substantial bond rearrangements expected during the conversion reaction, the lithium-ion insertion reaction of the a-LiFeSO₄F electrode remains stable without significant performance degradation.

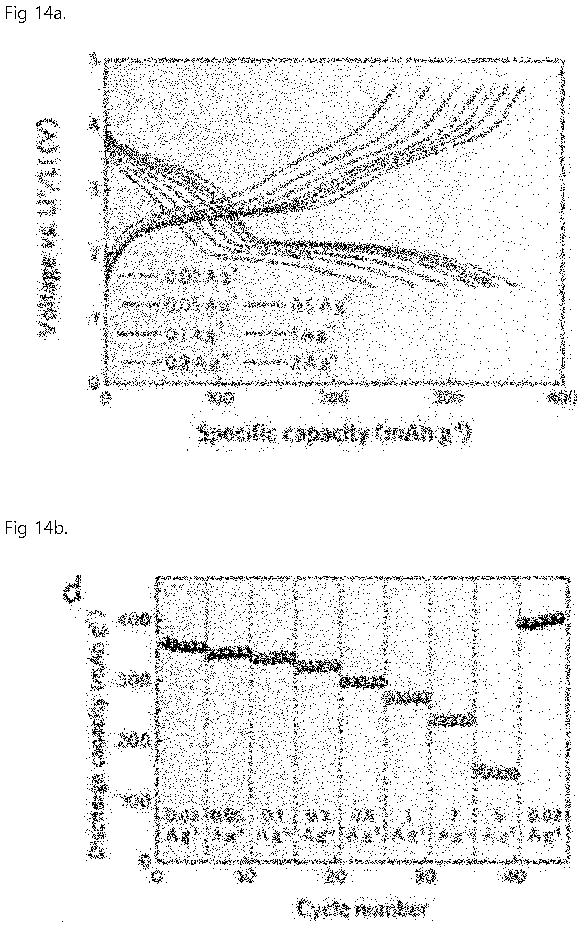

Figure 14a shows the charge/discharge profile of the half-cell according to Example 1 at current densities of 0.02 A/g, 0.05 A/g, 0.1 A/g, 0.2 A/g, 0.5 A/g, 1 A/g, and 2 A/g.

Figure 14b shows the discharge capacity of the half-cell according to Example 1 as a function of cycle number at a temperature of 60°C and current densities of 0.02 A/g, 0.05 A/g, 0.1 A/g, 0.2 A/g, 0.5 A/g, 1 A/g, and 2 A/g.

Referring to Figures 14a and 14b, in the half-cell according to Example 1, as the applied current density was increased from 0.02 A/g to 5 mA/g, a trend of decreasing specific capacity was observed. However, the half-cell according to Example 1 was able to maintain a specific capacity of over 250 mAh/g even at a current density of 1 A/g, suggesting that it exhibits appropriate rate performance.

Additionally, since repetitive conversion reactions induce morphological changes that lead to the reconfiguration of the electrode structure, the sharp increase in discharge capacity at the final 0.02 A/g can be attributed to the activation of the initially inactive stage.

Although the preferred embodiments of the present invention have been described in detail above, the scope of the present invention is not limited to these embodiments. Various modifications and improvements made by those skilled in the art using the basic concepts of the present invention, as defined in the following claims, also fall within the scope of the present invention.

This research was conducted with the support of the Samsung Future Technology Foundation (Project number: SRFC-TA1403-53).

## Claims

1. A secondary battery comprising a cathode including a transition metal-based lithium compound,
wherein in the differential capacity (dQ/dV)-voltage (V) graph of the secondary battery,
there is no peak value in the range of 3.8 to 4.0V,
a first peak exists in the range of 2.5 to 2.7V, and a second peak exists in the range of 2.1 to 2.3V.

2. The secondary battery according to claim 1, wherein the transition metal-based lithium compound includes an amorphous phase.

3. The secondary battery according to claim 1, wherein the differential capacity (dQ/dV)-voltage (V) graph of the secondary battery is obtained from 1 to 5 cycles at 0.01 C-rate to 0.5 C-rate and 25°C conditions.

4. The secondary battery according to claim 1, wherein the transition metal-based lithium compound includes a compound represented by the following general formula 1:
[General Formula 1] LiₓM₂₋ₓSO₄A
In the general formula 1,
M is one or more elements selected from the group consisting of Fe, Mg, Ni, Co, Cr, Ti, Cu, Ca, Zn, Zr, Nb, Mo, Sr, Sb, W, and Bi,
A is a halogen atom,
and 0.5 ≤ x ≤ 1.5.

5. The secondary battery according to claim 1, wherein the transition metal-based lithium compound includes LiFeSO₄F.

6. The secondary battery according to claim 1, wherein the particle size (D50) of the transition metal-based lithium compound is in the range of 0.5 to 3.0 µm.

7. The secondary battery according to claim 1, wherein the transition metal-based lithium compound includes an amorphous matrix and crystallite grains.

8. The secondary battery according to claim 7, wherein the crystallite grains include a plurality of grains, and the average size of each grain is in the range of 4 to 8 nm.

9. The secondary battery according to claim 1, further comprising:
a cathode;
a separator interposed between the cathode and the anode; and
an electrolyte.
